# EUROPEAN PATENT APPLICATION

(11) **EP 4 306 359 A1**
(43) Date of publication of application: **17.01.2024**
(21) Application number: 23184504.1
(22) Date of filing: 10.07.2023
(51) Int. Cl.: B60N 2/28

(54) **SUPPORT LEG AND CHILD SAFETY SEAT**

(30) Priority: 15.07.2022 CN 202221839368 U
(71) Applicant: Ningbo Baby First Baby Products Co., Ltd., Ningbo, Zhejiang 315412 (CN)
(72) Inventor: LIU, Jianchun, Zhejiang, 315412 (CN); JI, Xuewei, Zhejiang, 315412 (CN); JIANG, Chunling, Zhejiang, 315412 (CN)
(74) Representative: Ipside

(57) **Abstract**

The present application discloses a support leg and a child safety seat. The support leg is adapted to be mounted on a base; the support leg includes a support leg body, a connector and a stopper; the connector is arranged on the support leg body, and the connector is slidably connected to the base; and the stopper is arranged between the connector and the base, and the stopper is configured to limit separation of the connector from the base. The support leg and the child safety seat with the support leg are simple in structure, convenient to assemble, small in dead weight and low in production cost.

## Description

### Technical Field

The present application relates to the technical field of child safety seats, in particular to a support leg and a child safety seat.

### Background Art

At present, with people's increasing attention to child safety in a vehicle, a child safety seat, as an important tool to guarantee the safety, is widely favored by the public. An existing child safety seat generally includes a base and a seat body arranged on the base. In order to prevent the child safety seat from leaning forwards or overturning and falling off in the case of a vehicle collision or emergency brake during traveling, it is increasingly common to equip the child safety seat with support legs under the base for supporting.

However, the existing support leg is mounted to the base through two square tubes, resulting in a complex structure, a vast number of parts, a large weight, a cumbersome assembly and a high production cost.

In view of this, how to improve the existing support legs to overcome the above shortcomings is an urgent problem for a person skilled in the art.

### Summary of the Invention

An objective of the present application is to provide a support leg that is simple in structure, convenient to assemble, small in dead weight and low in production cost.

In order to achieve the above objective, a technical solution used by the present application is as follows: a support leg adapted to be mounted on a base, the support leg comprising a support leg body, a connector and a stopper, wherein the connector is arranged on the support leg body, and the connector is slidably connected to the base; and the stopper is arranged between the connector and the base, and the stopper is configured to limit separation of the connector from the base.

Preferably, the connector is connected into a sliding groove on the base in a front-back slidable manner; and the connector is provided with a limiting slot in a front-back direction, one end of the stopper is located in the limiting slot, and the other end of the stopper is connected to the base. The advantages are achieved as follows: a sliding range of the connector can be limited by the stopper and the limiting slot, so as to prevent the connector from being separated from the base.

Preferably, a lower surface of the base is provided with a mounting hole in communication with the sliding groove, and the stopper sequentially passes through the mounting hole and the limiting slot to be connected to the base. The advantages are achieved as follows: mounting of the stopper is facilitated through the mounting hole.

Preferably, the stopper is a screw, and a threaded end of the screw is connected to the base in a threaded manner. The advantages are achieved as follows: production and assembly are facilitated.

Preferably, the connector includes a sliding plate, and the sliding plate is slidably connected into the sliding groove. The advantages are achieved as follows: the structure of the connector is simple, and production is facilitated.

Preferably, the connector further includes a reinforcement plate, the reinforcement plate is arranged on the sliding plate, and the reinforcement plate is slidably connected into the sliding groove. The advantages are achieved as follows: by arranging the reinforcement plate on the sliding plate, a compressive strength of the sliding plate (namely, the connector) is improved.

Preferably, two reinforcement plates are provided, and the two reinforcement plates are formed on a left side and a right side of the sliding plate, respectively. The advantages are achieved as follows: production of the connector is facilitated and the production cost is reduced. For example, during production, firstly, a metal plate is integrally punched to form a blank, and then the blank is integrally punched to form the sliding plate and the reinforcement plate.

Preferably, a front end of the sliding groove runs through to the outside of the base. The advantages are achieved as follows: the connector can extend out of the front end of the sliding groove. That is to say, under the condition that a length of the sliding groove and a length of the connector are fixed, if the connector can extend out of the front end of the sliding groove, the sliding range of the connector is wider, thus further widening an adjustment range of the support leg.

Preferably, the support leg body and the connector are rotatably connected to each other, and the support leg body may rotate into an accommodation recess on a lower surface of the base. The advantages are achieved as follows: when the support leg body rotates into the accommodation recess, the support leg body is hidden into the base, such that a folding function between the support leg body and the base is achieved, an occupied space is reduced, and storage and transportation are facilitated.

Compared with the prior art, the support leg of the present application has the beneficial effects as follows: during mounting, the connector on the support leg body is slidably connected to the base, such that the support leg body is mounted on the base, and relative sliding between the support leg body and the base is also implemented; and then the stopper is mounted between the connector and the base, so as to limit separation of the connector from the base, and increase stability of a connection between the connector and the base. Compared with an existing assembly structure, the support leg omits a square tube connection, thereby making the structure simpler and assembly more convenient. It can be seen that the support leg is simple in structure, convenient to assemble, small in dead weight and low in production cost.

The present application further provides a child safety seat, including the support leg as stated above.

Compared with the prior art, the child safety seat in the present application has the same beneficial effects as the support leg above, which will not be repeated herein.

### Brief Description of the Drawings

FIG. 1 is a perspective view of a support leg and a base according to the present application.
FIG. 2 is an exploded view of a support leg and a base according to the present application.
FIG. 3 is a front view of a support leg and a base according to the present application.
FIGS. 4-5 are diagrams showing a sliding process between a connector and a sliding groove according to the present application.
FIG. 6 is a top view of a support leg and a base according to the present application.
FIG. 7 is a sectional view along line A-A in FIG. 6 according to the present application.
FIG. 8 is a partial enlarged view at portion B in FIG. 7 according to the present application.

In the figures: 1. Base; 11. Sliding groove; 12. Mounting hole; 13. Accommodation recess; 2. Support leg; 21. Support leg body; 211. Support portion; 22. Connector; 221. Sliding plate; 2211. Clearance notch; 222. Reinforcement plate; 223. Limiting slot; 23. Stopper; 3. Display.

### Detailed Description of Embodiments

The present application will be further described below in conjunction with specific embodiments. It should be noted that, on the premise of no conflict, embodiments or technical features described below can be arbitrarily combined to form a new embodiment.

In the description of the present application, it should be noted that an orientation or positional relationship indicated by an orientation term such as "center", "lateral", "longitudinal", "length", "width", "thickness", "upper", "lower", "front", "rear", "left", "right", "vertical", "horizontal", "top", "bottom", "inner", "outer", "clockwise" or "counterclockwise" is based on an orientation or positional relationship shown in accompanying drawings, is merely used for facilitating the description of the present application and simplifying the description, rather than indicating or implying that a device or element referred to should have a specific orientation or be constructed and operated in a specific orientation, and should not be construed as limiting the scope of protection of the present application.

It should be noted that a term such as "first" or "second" in the description and the claims of the present application is used to distinguish similar objects, rather than to describe a specific sequence or order.

The terms such as "include/comprise" and "have" and any variations thereof in the description and the claims of the present application are intended to cover non-exclusive inclusions, for example, processes, methods, systems, products, or devices that include a series of steps or units are not necessarily limited to those explicitly listed steps or units, but can include other steps or units not explicitly listed or inherent to the processes, methods, products, or devices.

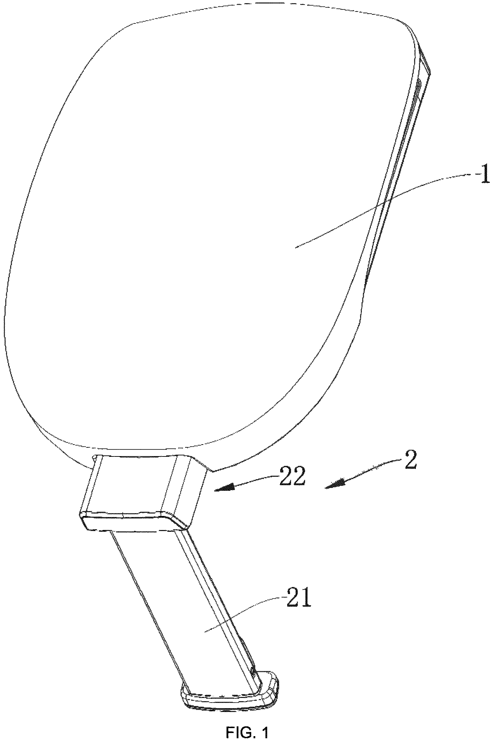

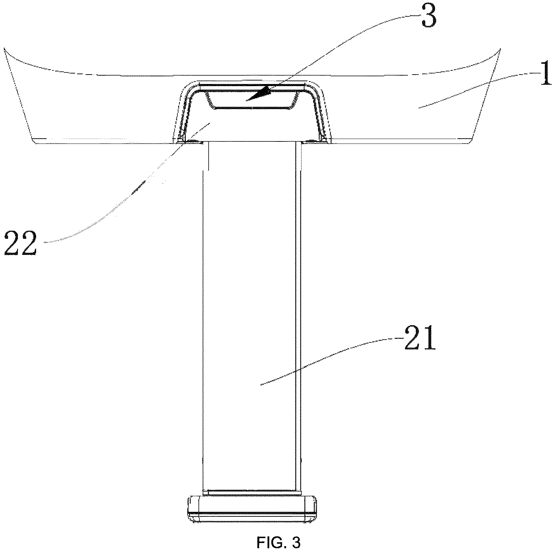

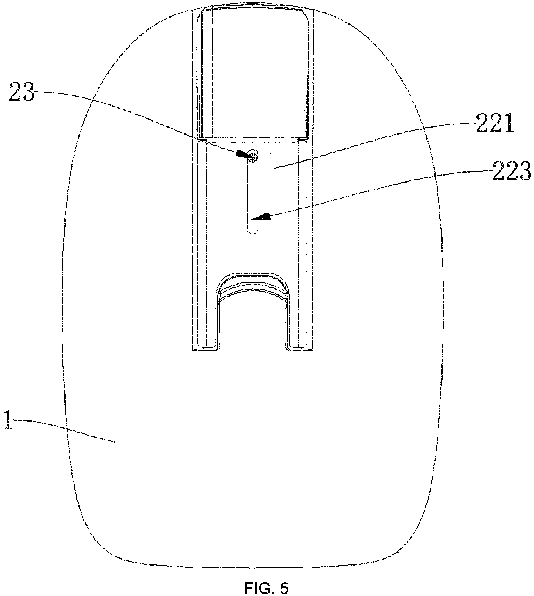

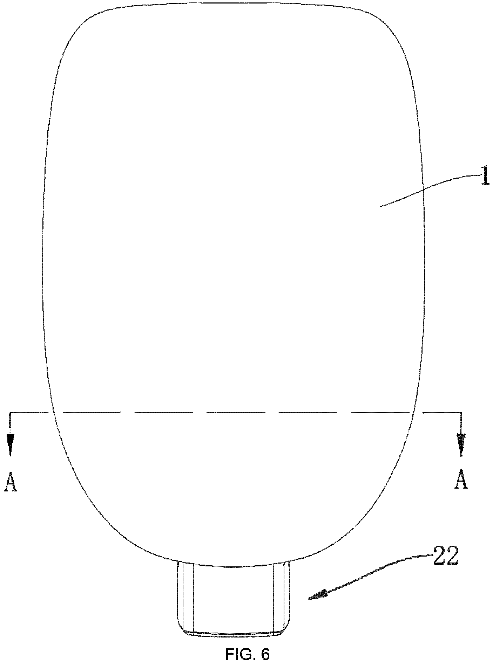

With reference to FIGS. 1-8, a support leg 2 provided by an embodiment of the present application is adapted to be mounted on a base 1. The support leg 2 includes a support leg body 21, a connector 22 and a stopper 23; the connector 22 is arranged on the support leg body 21, and the connector 22 is slidably connected to the base 1; and the stopper 23 is arranged between the connector 22 and the base 1, and the stopper 23 is configured to limit separation of the connector 22 from the base 1. During mounting, the connector 22 on the support leg body 21 is slidably connected to the base 1, such that the support leg body 21 is mounted on the base 1, and relative sliding between the support leg body 21 and the base 1 is also implemented; and then the stopper 23 is mounted between the connector 22 and the base 1, so as to limit separation of the connector 22 from the base 1, and increase stability of a connection between the connector 22 and the base 1. Compared with an existing assembly structure, the support leg 2 omits a square tube connection, thereby making the structure simpler and assembly more convenient. It can be seen that the support leg is simple in structure, convenient to assemble, small in dead weight and low in production cost. It should be noted that specific structures of the base 1 and the support leg body 21 are not limited to structures in the accompanying drawings, and can be any structure in the prior art. In addition, the support leg body 21 or the connector 22 is provided with a display 3 for displaying a use state of the support leg body 21.

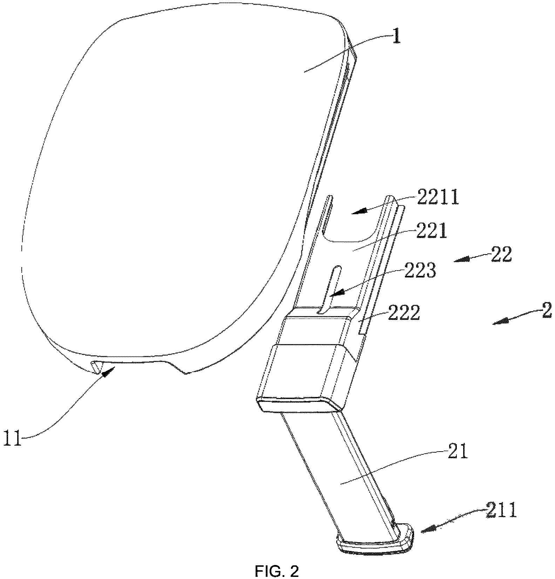

With reference to FIGS. 2-8, in some embodiments of the present application, the connector 22 is connected into a sliding groove 11 on the base 1 in a front-back slidable manner; and the connector 22 is provided with a limiting slot 223 in a front-back direction, one end of the stopper 23 is located in the limiting slot 223, and the other end of the stopper 23 is connected to the base 1. A sliding range of the connector 22 can be limited by the stopper 23 and the limiting slot 223, so as to prevent the connector 22 from being separated from the base 1.

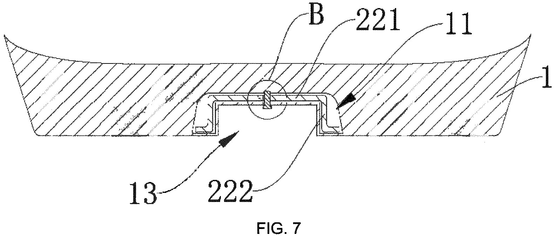

With reference to FIGS. 7-8, in some embodiments of the present application, a lower surface of the base 1 is provided with a mounting hole 12 in communication with the sliding groove 11, and the stopper 23 sequentially passes through the mounting hole 12 and the limiting slot 223 to be connected to the base 1. Mounting of the stopper 23 is facilitated through the mounting hole 12.

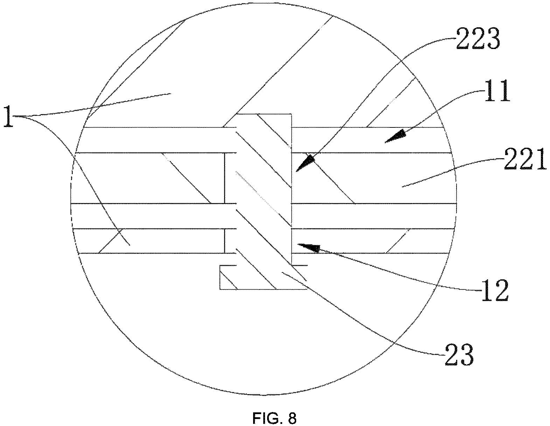

With reference to FIG. 8, in some embodiments of the present application, the stopper 23 is a screw, and a threaded end of the screw is connected to the base 1 in a threaded manner. Production and assembly are facilitated.

With reference to FIGS. 1-5, in some embodiments of the present application, the connector 22 includes a sliding plate 221, and the sliding plate 221 is slidably connected into the sliding groove 11. The structure of the connector 22 is simple, and production is facilitated.

With reference to FIG. 2, in some embodiments of the present application, the connector 22 further includes a reinforcement plate 222, the reinforcement plate 222 is arranged on the sliding plate 221, and the reinforcement plate 222 is slidably connected into the sliding groove 11. By arranging the reinforcement plate 222 on the sliding plate 221, a compressive strength of the sliding plate 221 (namely, the connector 22) can be improved.

With reference to FIG. 2, in some embodiments of the present application, two reinforcement plates 222 are provided, and the two reinforcement plates 222 are formed on a left side and a right side of the sliding plate 221, respectively. Production of the connector 22 is facilitated and the production cost is reduced. For example, during production, firstly, a metal plate is integrally punched to form a blank, and then the blank is integrally punched to form the sliding plate 221 and the reinforcement plate 222.

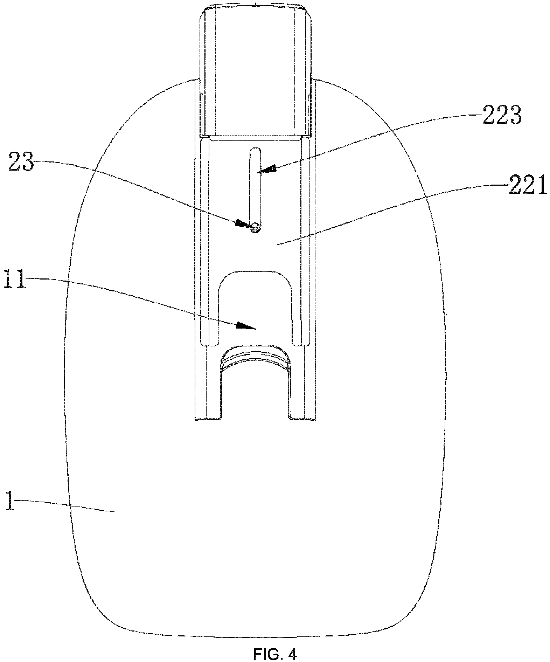

With reference to FIGS. 2-5, in some embodiments of the present application, a front end of the sliding groove 11 runs through to the outside of the base 1. The connector 22 can extend out of the front end of the sliding groove 11 (as shown in FIG. 4). That is to say, under the condition that a length of the sliding groove 11 and a length of the connector 22 are fixed, if the connector 22 can extend out of the front end of the sliding groove 11, the sliding range of the connector 22 is wider, thus further widening an adjustment range of the support leg 2. In addition, mounting of the support leg 2 on the base 1 is facilitated. During mounting, the connector 22 extends into, and is connected into the sliding groove 11 in a front-back slidable manner through the front end of the base 1, and then the stopper 23 extends into the sliding groove 11 through the mounting hole 12 on the lower surface of the base 1 and is connected to the base 1 after penetrating the limiting hole, to limit separation of the connector 22 from the front end of the base 1.

With reference to FIGS. 1-2 and FIGS. 6-7, in some embodiments of the present application, the support leg body 21 and the connector 22 are rotatably connected to each other, and the support leg body 21 can rotate into an accommodation recess 13 on a lower surface of the base 1. When the support leg body 21 rotates into the accommodation recess 12, the support leg body 21 is hidden into the base 1, such that a folding function between the support leg body 21 and the base 1 is achieved, an occupied space is reduced, and storage and transportation are facilitated. In addition, in order to improve support stability of the support leg body 21, a support portion 211 is generally provided at a lower end of the support leg body 21, so as to increase a contact area between a lower end of the support leg 2 and the ground. When the support leg body 21 rotates and is hidden into the accommodation recess 13, in order to prevent interference between the support portion 211 and the connector 22, it is necessary to arrange a clearance notch 2211 on the connector 22 (as shown in FIG. 2).

With reference to FIGS. 1-8, in some embodiments of the present application, a child safety seat is provided. The child safety seat includes the support leg 2 as stated above. Compared with the prior art, the child safety seat in the present application has the same beneficial effects as the support leg 2 above, which will not be repeated herein.

To sum up, the support leg and the child safety seat with the support leg are simple in structure, convenient to assemble, small in dead weight and low in production cost.

The basic principles, main features and advantages of the present application are described above. Those skilled in the art shall understand that the present application is not limited to the above embodiments, the above embodiments and the description merely illustrate the principle of the present application, various changes and improvements can be made to the present application without departing from the spirit and scope of the present application, and these changes and improvements shall fall within the scope of protection of the present application. The scope of protection of the present application is defined by the appended claims and their equivalents.

## Claims

1. A support leg adapted to be mounted on a base, **characterized in that** the support leg comprises a support leg body, a connector and a stopper; the connector is arranged on the support leg body, and the connector is slidably connected to the base; and the stopper is arranged between the connector and the base, and the stopper is configured to limit separation of the connector from the base.

2. The support leg according to claim 1, **characterized in that** the connector is connected into a sliding groove on the base in a front-back slidable manner; and the connector is provided with a limiting slot in a front-back direction, one end of the stopper is located in the limiting slot, and the other end of the stopper is connected to the base.

3. The support leg according to claim 2, **characterized in that** a lower surface of the base is provided with a mounting hole in communication with the sliding groove, and the stopper sequentially passes through the mounting hole and the limiting slot to be connected to the base.

4. The support leg according to claim 3, **characterized in that** the stopper is a screw, and a threaded end of the screw is connected to the base in a threaded manner.

5. The support leg according to claim 2, **characterized in that** the connector comprises a sliding plate, and the sliding plate is slidably connected into the sliding groove.

6. The support leg according to claim 2, **characterized in that** the connector further comprises a reinforcement plate, the reinforcement plate is arranged on the sliding plate, and the reinforcement plate is slidably connected into the sliding groove.

7. The support leg according to claim 6, **characterized in that** two reinforcement plates are provided, and the two reinforcement plates are formed on a left side and a right side of the sliding plate, respectively.

8. The support leg according to claim 2, **characterized in that** a front end of the sliding groove runs through to the outside of the base.

9. The support leg according to claim 1, **characterized in that** the support leg body and the connector are rotatably connected to each other, and the support leg body can rotate into an accommodation recess on a lower surface of the base.

10. A child safety seat, **characterized by** comprising a support leg according to any one of claims 1-9.
